(19) **Europäisches Patentamt**

**European Patent Office**

**Office européen des brevets**

(11) **EP 0 995 291 B1**

(12) **EUROPÄISCHE PATENTSCHRIFT**

(45) Veröffentlichungstag und Bekanntmachung des Hinweises auf die Patenterteilung:
**27.11.2002   Patentblatt 2002/48**

(51) Int Cl.[7]: **H04L 12/56**, H04Q 11/04

(21) Anmeldenummer: **98946231.2**

(86) Internationale Anmeldenummer:
**PCT/DE98/01932**

(22) Anmeldetag: **10.07.1998**

(87) Internationale Veröffentlichungsnummer:
**WO 99/003232 (21.01.1999 Gazette 1999/03)**

(54) **VERFAHREN ZUM OPTIMIEREN DER AUSLASTUNG AUF VERBINDUNGSABSCHNITTEN BEI ABR VERKEHR**

METHOD FOR OPTIMIZING THE UTILIZATION OF CONNECTION SECTIONS IN AVAILABLE BIT RATE (ABR) TRAFFIC

PROCEDE POUR OPTIMISER L'EXPLOITATION DE LA CAPACITE SUR DES SECTIONS DE CONNEXION EN TRAFIC A DEBIT BINAIRE DISPONIBLE (ABR)

(84) Benannte Vertragsstaaten:
**AT BE CH DE ES FR GB IT LI NL**

(30) Priorität: **10.07.1997   DE 19729590**

(43) Veröffentlichungstag der Anmeldung:
**26.04.2000   Patentblatt 2000/17**

(73) Patentinhaber: **SIEMENS AKTIENGESELLSCHAFT
80333 München (DE)**

(72) Erfinder:
• **HEISS, Herbert
  D-82008 Unterhaching (DE)**
• **KERSHAW, James
  East Burwood, VIC 3151 (AU)**

(56) Entgegenhaltungen:
**EP-A- 0 719 012**

• **LIEBEHERR J ET AL: "A MULTI-LEVEL EXPLICIT RATE CONTROL SCHEME FOR ABR TRAFFIC WITH HETEROGENEOUS SERVICE REQUIREMENTS" PROCEEDINGS OF THE 16TH. INTERNATIONAL CONFERENCE ON DISTRIBUTED COMPUTING SYSTEMS, HONG KONG, MAY 27 - 30, 1996, Nr. CONF. 16, 27. Mai 1996, Seiten 570-577, XP000640214 INSTITUTE OF ELECTRICAL AND ELECTRONICS ENGINEERS**
• **KOIKE A ET AL: "ON END SYSTEM BEHAVIOR FOR EXPLICIT FORWARD CONGESTION INDICATION OF ABR SERVICE AND ITS PERFORMANCE" IEICE TRANSACTIONS ON COMMUNICATIONS, Bd. E79B, Nr. 4, 1. April 1996, Seiten 605-610, XP000587976**

**Beschreibung**

Die Erfindung betrifft ein Verfahren gemäß dem Oberbegriff des Patentanspruchs 1.

Bei Verbindungen, über die Informationen nach einem asynchronen Transfermodus (ATM) übertragen werden, sind eine Mehrzahl von Verbindungstypen definiert. So werden zum einen Verbindungen, mittels denen Informationen mit einer konstanten Bitrate (Constant Bit Rate, CBR) übertragen werden, von Verbindungen unterschieden, über die Informationen mit einer variablen Bitrate (Variable Bit Rate, VBR) übertragen werden.

Als weiterer Verbindungstyp sind Verbindungen zu nennen, mittels denen Informationen mit einer verfügbaren Bitrate (Available Bit Rate, ABR) übertragen werden. Dabei handelt es sich um Verbindungen, über die Informationen mit niedriger Priorität zwischen einer Sendeeinrichtung und einer Empfangseinrichtung übertragen werden.

Zu diesem Zweck werden in den von der Sendeeinrichtung ausgehenden Strom von einer Verbindung zugehörigen ATM-Zellen in einem zeitlichen Raster Steuerzellen eingefügt. In der Regel ist dies etwa bei jeder 32. ATM-Zelle der Fall. Die ATM-Zellen werden nun zusammen mit den Steuerzellen der in Frage kommenden Empfangseinrichtung zugeführt. Diese entnimmt die die Nutzinformationen tragenden ATM-Zellen dem Zellenstrom. Zusätzlich hierzu werden die Steuerzellen entnommen und mit verbindungsbezogenen Daten sowie Daten über den aktuellen Zustand der Verbindungsabschnitte beschrieben der Sendeeinrichtung zurückgeleitet.Dort werden den Steuerzellen die verbindungsbezogenen Informationen entnommen und gegebenenfalls die Übertragungsrate reduziert.

Aus der europäischen Patentanmeldung EP 0 719 012 A 2 ist ein Verfahren zur Verkehrslenkung und Überlastabwehr für paketorientierte Netze bekannt. Darin wird eine virtuelle Verbindung zwischen einem Quellenknoten und einem Zielknoten aufgebaut, über den ATM-Zellen geleitet werden. Wenn die Ressourcen einer virtuellen Verbindung nicht voll ausgenutzt werden, wird die Übertragungsrate erhöht. Wenn die Ressourcen einer virtuellen Verbindung über der Kapazitätsgrenze des Übertragungsweges liegen, wird die Übertragungsrate reduziert. Da das Messen der ATM-Zellen innerhalb einer festen Zeitspanne erfolgt, ist die Dynamik des Übertragungsvorganges beeinträchtigt.

Aus der Druckschrift "A MULTI-LEVEL EXPLICIT RATE CONTROL SCHEME FOR ABR TRAFFIC WITH HETEROGENEOUS SERVICE REQUIREMENTS", Jörg Liebeherr et al, Proceedings of the 16th Int. Conf. on distributed computing systems, Hong Kong, May 27-30, 1996, Nr. 16, S. 570-577, ist ebenfalls ein Verfahren zur Überlastabwehr bei ABR-Verkehr bekannt. Dabei werden theoretische Überlegungen über ein mehrstufiges Verfahren erwähnt, die auf praktische Gegebenheiten nicht ohne weiteres übertragen werden können. Wie das Messen der ABR-Verkehr zugehörigen ATM-Zellen erfolgen soll, wird hier allerdings nicht angesprochen.

Schließlich ist der Druckschrift "ON END SYSTEM BEHAVIOR FOR EXPLICIT FORWARD CONGESTION INDICATION OF ABR SERVICE AND ITS PERFORMANCE", Arata Koike et al, IEICE Transactions on communications, Bd. E79-B, Nr. 4, 1. April 1996, Seiten 605-610 ebenfalls ein Verfahren zur Überlastabwehr bei ABR-Verkehr entnehmbar. Auch hier werden auf Simulationen basierende theoretische Überlegungen dargelegt, die auf praktische Gegebenheiten ebenso nicht ohne weiteres übertragen werden können. Wie das Messen der ABR-Verkehr zugehörigen ATM-Zellen erfolgen soll, wird hier allerdings nicht angesprochen.

In dem Vorschlag zum ATM Forum 96-1172 wird vorgeschlagen, ABR Verkehr zugehörige ATM Zellen nach Maßgabe eines vorgegebenen Algorithmuses (ERICA) zu steuern. Wie dies jedoch unter praktischen Gegebenheiten durchgeführt werden soll, wird hier nicht angesprochen.

Der Erfindung liegt die Aufgabe zugrunde, einen Weg aufzuzeigen, wie ABR Verkehr zugehörige ATM Zellen in effizienter Weise gesteuert werden.

Die Erfindung wird ausgehend von den im Oberbegriff von Patentanspruch 1 angegebenen Merkmalen durch die Merkmale des kennzeichnenden Teils gelöst.

Vorteilhaft an der Erfindung ist insbesondere das Messen der Häufigkeit der ABR Verkehr zugehörigen ATM Zellen. Nach Maßgabe des Messens weiterer Parameter werden diese dann einem Steuerungsverfahren unterworfen und das Resultat dieser Berechnungen im Informationsteil der rückübertragenen Steuerzellen eingefügt.

Vorteilhafte Weiterbildungen der Erfindung sind in den Unteransprüchen angegeben.

Gemäß Anspruch 2 ist vorgesehen, daß die weiteren gemessenen Parameter direkte verbindungsbezogene Parameter sind, die ein Maß für den aktuellen Füllstand der Warteschlange, den aktuellen Füllstand der Schedulerblocks, sowie den aktuellen Füllstand der als Summe der Schedulerblocks berechnete Parameter sind. Damit ist der Vorteil verbunden, daß ein aktuelles Abbild der Verbindung in dem Switch vorhanden ist. Dabei wird unter dem Begriff Schedulerblock eine Gruppe von Verbindungen verstanden, über die jeweils ATM-Zellen geleitet und auf einen einzigen Verbindungsabschnitt oder virtuellen Pfad mit vorgegebener Spitzenbitrate gemultiplext werden.

Gemäß Anspruch 3 ist vorgesehen, daß die weiteren gemessenen Parameter indirekt verbindungsbezogene Parameter sind, die ein Maß für die die momentane Rate sind, die der Schedulerblock für alle ABR Verbindungen des betreffenden Schedulerblockes verbraucht hat und/oder die ein Maß für die momentane Rate sind, die für die Summe aller ABR Verbindungen des betreffenden Schedulerblockes frei wäre.

Gemäß Anspruch 4 ist vorgesehen, daß das Resultat der Messung der Häufigkeit des Auftretens der ATM-Zellen zusammen mit den weiteren gemessenen Parametern nach dem Meßvorgang in wenigstens einer Eingangswarteschlange gespeichert wird, bevor sie als Eingangsparameter dem Steuerungsverfahren zugeführt werden.

Gemäß Anspruch 5 ist vorgesehen, daß das Ergebnis des Steuerungsverfahrens in einer ersten Warteschlange gespeichert, anschließend in ein Exponentialformat umgewandelt und in die Steuerzellen eingetragen wird. Mit der Umwandlung in ein Exponentialformat ist der Vorteil verbunden, daß eine besonders effiziente Speicherung des ermittelten Wertes durchgeführt werden kann. Die Speicherung des Ergebnisses des Steuerungsverfahrens in der ersten Warteschlange bringt den Vorteil mit sich, daß eventuell auftretende Geschwindigkeitsschwankungen des Steuerungsverfahrens ausgeglichen werden können.

Gemäß Anspruch 6 ist vorgesehen, daß die ATM-Zellen während des Meßvorganges in einer zweiten Warteschlange kurzzeitig gespeichert werden. Dies erfolgt, um einen Lesevorgang der im Informationsteil einer ATM-Zelle gespeicherten VCI/VPI Nummer durchführen zu können. Damit ist der Vorteil verbunden, daß die für das statistischee Multiplexen sowieso erforderliche Speicherung für den Meßvorgang mitbenutzt wird.

Vorteilhafte Weiterbildungen der Erfindung sind in den Unteransprüchen 7 bis 10 angegeben.

Die Erfindung wird im folgenden anhand eines Ausführungsbeispiels näher erläutert.

Es zeigen

FIG 1    die grundlegenden Verhältnisse beim ABR Verkehr

FIG 2    das erfindungsgemäße Verfahren

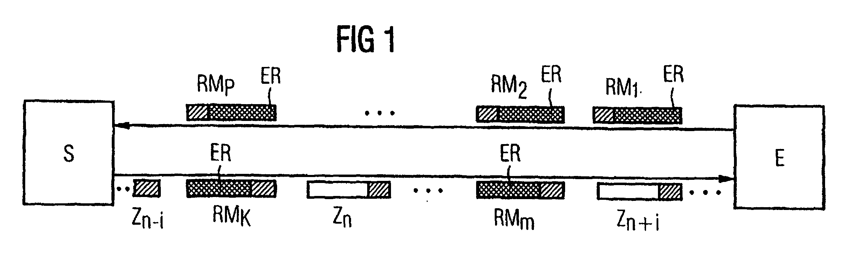

In Fig. 1 ist aufgezeigt, wie einer ABR Verbindung zugehörige ATM-Zellen $Z_{n-1}$, $Z_n$, $Z_{n+1}$ zwischen Sendeeinrichtung und Empfangseinrichtung übertragen werden. Demgemäß sind Sendeeinrichtungen S und Empfangseinrichtungen E aufgezeigt. Die Sendeeinrichtungen S können eine - in Fig. 1 nicht dargestellte - Mehrzahl von Sendeeinrichtungen aufweisen, in gleicher Weise können die Empfangseinrichtungen E ebenso eine weitere - in Fig. 1 ebenfalls nicht dargestellte - Mehrzahl von Empfangseinrichtungen aufweisen. Zwischen der Mehrzahl von Sendeeinrichtungen S und der weiteren Mehrzahl von Empfangseinrichtungen E ist ein gemeinsamer Verbindungsabschnitt angeordnet, auf die die von einer Sendeeinrichtung ausgehenden ATM-Zellen zu der in Frage kommenden Empfangseinrichtung übertragen werden. In der Praxis werden über den gemeinsamen Verbindungsabschnitt ATM-Zellen unterschiedlicher Verbindungstypen geleitet. Die den jeweiligen Verbindungen zugehörigen ATM-Zellen müssen nun auf dem gemeinsamen Verbindungsabschnitt einem Regelwerk unterworfen werden, nach dessen Maßgabe die ATM-Zellen zu übertragen sind. Die entsprechenden Theorien sind eng mit der Theorie des statistischen Multiplexens verbunden.

Da über den gemeinsamen Verbindungsabschnitt in der Regel ATM-Zellen von unterschiedlichen Verbindungstypen geleitet werden,müssen zur Beschreibung dieser Verbindungen eine Reihe von Übertragungsparametern definiert werden. Hierzu zählt beispielsweise die Spitzenzellenrate (Peak Cell Rate, PCR). Dabei handelt es sich um eine obere Grenze für die Anzahl der Zellen, die pro Sekunde von einer sendenden Einrichtung übertragen werden können. Weiterhin wird eine minimale Zellenrate definiert (Minimum Cell Rate, MCR). Aus Sicht der Sendeeinrichtung wird damit die minimale Rate definiert, mit der ATM-Zellen gesendet werden können. Aus Sicht des Verbindungsnetzwerkes (Switch) bedeutet sie die minimale Durchsatzrate, die der Switch auf dem Verbindungsabschnitt reservieren muß.

Gemäß Fig. 1 werden ausgehend von einer der Sendeeinrichtungen in den Strom von einer ABR Verbindung zugehörigen ATM-Zellen in einem etwa zeitlichen Raster Steuerzellen $RM_k$, $RM_m$ eingefügt. Die ATM-Zellen werden zusammen mit den Steuerzellen der in Frage kommenden Empfangseinrichtung zugeführt, womit eine Vorwärtsrichtung definiert ist. Diese entnimmt die die Nutzinformationen tragenden ATM-Zellen und wertet die entsprechenden Informationen aus. Weiterhin werden die Steuerzellen $RM_1...RM_p$ dem Zellenstrom entnommen und der sendenden Einrichtung zurückgeleitet, womit eine Rückwärtsrichtung definiert ist.

Während des Verbindungsaufbaus wird nun im Informationsteil einer solchen Steuerzelle $RM_x$ eine sehr hohe Spitzenzellenrate abgelegt. Hierzu ist im Informationsteil der Steuerzelle ein spezielles Feld ER vorgesehen (Explicit Rate Feld). In jedem der für die Übertragung eingebundenen Switche wird der Strom der ATM-Zellen daraufhin überprüft, ob die eingetragene Spitzenzellenrate dieser ABR Verbindung aufgrund der momentan herrschenden Verkehrslast eingehalten werden kann.

Zu diesem Zweck werden jeweils Messungen der Durchsatzrate sowie weiterer verbindungsbezogener Parameter durchgeführt und als Eingangsgröße einem in der Einrichtung ERCALC ablaufenden Steuerungsverfahren zugeführt. Da die Steuerzellen wieder der Sendeeinrichtung in Rückwärtsrichtung über denselben Switch zugeführt werden, wird in diesem Switch gegebenenfalls der nach Maßgabe des Berechnungsalgorithmuses berechnete Wert wieder im Informationsteil der Steuerzelle RM eingetragen. Diese wird an die sendende Einrichtung weitergeleitet, wo diese Information entnommen und mit den hier Abgelegten verglichen werden.

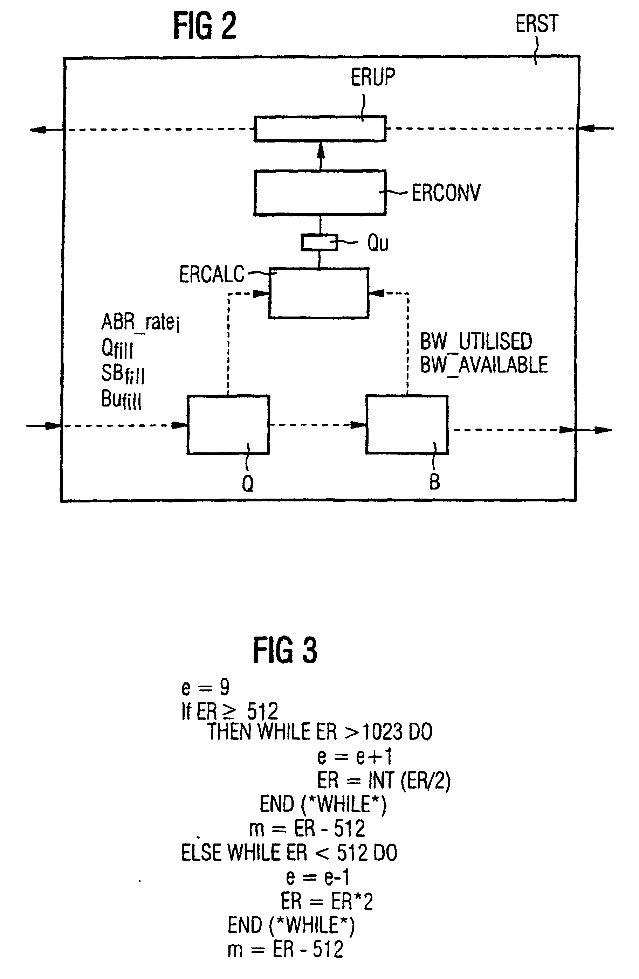

In Fig. 2 ist nun das erfindungsgemäße Verfahren im Detail anhand lediglich einer in einem Switch angeordnete Steuereinrichtung ERST aufgezeigt. Demgemäß durchlaufen die ATM-Zellen aller ABR Verbindungen diese Steuereinrichtung ERST. Die Funktion dieser Steuereinrichtung besteht darin, die ankommenden ABR Zellen verbindungsindividuell zu messen und die in Rückwärtsrichtung übertragenen Steuerzellen RM mit der errechneten Information zu beaufschlagen.

In der Steuereinrichtung ERST werden die ankommenden ABR Zellen zunächst in einer als Speicher Q ausgebildeten Warteschlange kurzfristig zwischengespeichert. Währenddessen wird dem Zellenkopf die virtuelle Kanalnummer VCI bzw. die virtuelle Pfadnummer VPI entnommen. Da zu Beginn des Verbindungsaufbaus eine Zuordnung zwischen den Werten VCI/VPI und dem Verbindungstyp erstellt wurde, kann nun anhand der virtuellen Nummern VCI/VPI ermittelt werden, zu welchem Verbindungstyp die aktuelle Verbindung gehört. Insbesondere lassen sich damit ABR Verbindungen zugehörige ATM-Zellen verifizieren. Dies ist insofern ein wesentlicher Gesichtspunkt, da ATM-Zellen aller Verbindungstypen, also auch ATM-Zellen von CBR- oder VBR-Verkehr den Switch durchlaufen.

Bei der Ankunft von einer ABR Verbindung i zugehörenden ATM-Zellen wird gegebenfalls die Ankunftsrate $ABR\_rate_i$ ermittelt. Zusätzlich werden weitere direkt verbindungsbezogene Parameter gemessen. Hierzu gehören der aktuelle Füllstand der (verbindungsbezogenen) Warteschlange $Q_{fill}$, der aktuelle Füllstand der Schedulerblocks $SB_{fill}$, sowie der aktuelle Füllstand der als Summe der Schedulerblocks berechnete Parameter $Bu_{fill}$. Nachdem eine solche Messung stattgefunden hat, werden die gemessenen Parameter einer Eingangswarteschlange der Vorrichtung ERCALC zugeführt.

Diese Parameter werden als Eingangsgröße für das Steuerungsverfahren verwendet, welches in der Einrichtung ERCALC gesteuert wird. Nach dem Meßvorgang wird die einer ABR Verbindung zugehörige ATM-Zelle wieder nach Maßgabe eines statistischen Multiplexalgortihmus (z.B. Weighted Fair Queing) wieder freigegeben und einer weiteren Einrichtung B, die als Pufferspeicher ausgebildet ist, zugeführt. Dort wird eine Größe BW_UTILISED ermittelt, die die nicht verbindungsspezifische Auslastung auf dem Verbindungsabschnitt wiedergibt. Dies ist die momentane Rate, die der Schedulerblock für alle ABR Verbindungen des betreffenden Schedulerblockes verbraucht hat. Ferner wird hier eine Größe BW_AVAILABLE ermittelt, die die momentane Rate wiedergibt, die für die Summe aller ABR Verbindungen des betreffenden Schedulerblockes frei wäre. Diese Messungen werden am Ausgang zyklisch durch Schedulerblock-bezogene Events getriggert, während die eingangsseitigen Messungen durch verbindungsbezogene Events getriggert werden. Die (ausgangsseitig) gemessenen Werte werden in einer weiteren - in Fig. 2 nicht aufgezeigten - Eingangswarteschlange gespeichert und dem in der Einrichtung ERCALC ablaufenden Steuerungsverfahren ebenfalls als Eingangsparameter zugeführt.

Als Ergebnis des Steuerungsverfahrens wird eine Zahl ER (Explicit Cell Rate) ermittelt, die die Rate wiedergibt, die der Switch für diese Verbindung zugeteilt hat. Sie wird in Zellen pro Sekunde ausgedrückt. Sie ist größer oder gleich der vorgegebenen minimalen Zellenrate $MCR_i$ der Verbindung i und wird in der Einrichtung ERCALC gespeichert, wobei die vorgegebene minimale Zellenrate $MCR_i$ stets größer oder gleich 1 Zelle/sec ist. Das Speichern kann dabei in Form einer verketteten Liste erfolgen.

Um den derart ermittelten Wert einer der rückwärts übertragenen Steuerzellen RM zu übergeben bedarf es noch einer Umsetzung in ein Exponent/ Mantissen Format. Dieses ist gemäß ATM Forum definiert durch:

$$2^e(1+m/512) \text{ für } 0 \leq m < 512$$

Bevor der durch das Steuerungsverfahren ermittelte Wert dem in der Einrichtung ERCONV ablaufenen Umsetzverfahren zugeführt wird, erfolgt ein weiteres Zwischenspeichern in der in Fig. 2 aufgezeigten Warteschlange QU.

In Fig. 3 ist der Umsetzverfahren in Pseudocode aufgezeigt. Demgemäß wird mit einem e Wert von 9 gestartet. Der minimale Wert von e beträgt 0, während der maximale Wert von e in der Größenordnung von 32 liegt. Beispielhaft sei angeführt, daß für eine 150 Mbit Verbindung der maximale e Wert bei 18 liegt. Insofern liegt ein Startwert von 9 in etwa in der Mitte dieser Bandbreite. Je nach dem, ob der gemessene ER Wert größer oder kleiner als 512 liegt, werden der e Wert inkrementiert bzw. dekrementiert. Ein Startwert mit e = 0 funktioniert ebenso, braucht aber erheblich mehr Zeit, um beispielsweise zum Wert e = 18 zu gelangen. Insofern ist mit dem Umsetzverfahren gemäß Fig. 3 ein Dynamikvorteil verbunden.

Als Ergebnis dieser Berechnungen wird somit die Anzahl der Zellen pro pro Sekunde in einem Exponent/ Mantissen Format ermittelt. Passiert nun eine Steuerzelle RM die Steuereinrichtung ERST in Rückwärtsrichtung, wird das ER Feld dieser Steuerzelle aktualisiert. Dies erfolgt, indem die betreffende Steuerzelle RM in einer Einrichtung ERUP kurzzeitig zwischengespeichert wird. Ist der im ER Feld stehende Wert größer als der berechnete Wert,wird der berechnete Wert in den Informationsteil dieser Steuerzelle eingetragen. Dies bedeutet, daß diese Verbindung in Überlast ist. Die Sendeeinrichtung ermittelt diesen Zustand, indem sie den eingetragenen Wert mit einem intern zu Beginn des Übertragungsvorganges abgespeicherten Wert vergleicht. Hier muß nun ein neuer, reduzierter Wert für eine erneute Übertragung eingetragen werden.

Ist der im ER Feld stehende Wert kleiner als der berechnete Wert, wird der im Informationsteil der Steuerzelle eingetragene Wert beibehalten. Die Sendeeinrichtung braucht somit keinen neuen Wert für neu anstehende Übertragungen einzutragen.

**Patentansprüche**

1. Verfahren zum Optimieren der Auslastung auf Verbindungsabschnitten bei ABR Verkehr, mit ABR Verkehr zugehörigen ATM-Zellen, die zwischen wenigstens einer Sendeeinrichtung (S) und wenigstens einer Empfangseinrichtung (E) über gemeinsame Verbindungsabschnitte übertragen werden, womit eine Vorwärtsrichtung definiert wird und wobei in den Strom von ATM-Zellen Steuerzellen (RM) eingefügt werden,die von der wenigstens einen Empfangseinrichtung (E) entnommen und zu der wenigstens einen Sendeeinrichtung (S) zurückgesendet werden, womit eine Rückwärtsrichtung definiert wird,
   **dadurch gekennzeichnet,**
   **daß** während der Übertragung in Vorwärtsrichtung die Häufigkeit des Auftretens der ATM-Zellen verbindungsindividuell gemessen und das derart ermittelte Resultat ($ABR\_Rate_i$) mit weiteren gemessenen Parametern einem Steuerungsverfahren zugeführt wird, welches durch die Messung der Häufigkeit des Auftretens der ATM-Zellen ($ABR\_Rate_i$) gestartet wird,
   **daß** die Eintragung des Ergebnisses dieses Steuerungsverfahrens in die in Rückwärtsrichtung übertragenen Steuerzellen (RM) davon abhängig gemacht wird, ob dieses Ergebnis größer oder kleiner als ein dort mitgeführter Wert (ER) ist, und
   **daß** die Anpassung der Übertragungsrate in der Sendeeinrichtung (S) von diesem in den Steuerzellen (RM) enthaltenen Wert abhängig gemacht wird.

2. Verfahren nach Anspruch 1,
   **dadurch gekennzeichnet,**
   **daß** die weiteren gemessenen Parameter direkte verbindungsbezogene Parameter sind, die ein Maß für den aktuellen Füllstand der Warteschlange ($Q_{fill}$), den aktuellen Füllstand der Schedulerblocks ($SB_{fill}$), sowie den aktuellen Füllstand der als Summe der Schedulerblocks berechnete Parameter ($Bu_{fill}$) sind.

3. Verfahren nach Anspruch 1,
   **dadurch gekennzeichnet,**
   **daß** die weiteren gemessenen Parameter (BW_UTILISED, BW_AVAILABLE) indirekt verbindungsbezogene Parameter sind, die ein Maß für die momentane Rate sind, die der Schedulerblock für alle ABR Verbindungen des betreffenden Schedulerblockes verbraucht hat (BW_UTILISED) und/ oder die ein Maß für die momentane Rate sind, die für die Summe aller ABR Verbindungen des betreffenden Schedulerblockes frei wäre (BW_AVAILABLE).

4. Verfahren nach Anspruch 1, 2 oder 3,
   **dadurch gekennzeichnet,**
   **daß** das Resultat der Messung der Häufigkeit des Auftretens der ATM-Zellen ($ABR\_Rate_i$) zusammen mit den weiteren gemessenen Parametern nach dem Meßvorgang in wenigstens einer Eingangswarteschlange gespeichert wird, bevor sie als Eingangsparameter dem Steuerungsverfahren zugeführt werden.

5. Verfahren nach einem der vorstehenden Ansprüche,
   **dadurch gekennzeichnet,**
   **daß** das Ergebnis des Steuerungsverfahrens in einer ersten Warteschlange (QU) gespeichert, anschließend in ein Exponentialformat umgewandelt und in die Steuerzellen (RM) eingetragen wird.

6. Verfahren nach einem der vorhergehenden Ansprüche,
   **dadurch gekennzeichnet,**
   **daß** die ATM-Zellen während des Meßvorganges in einer zweiten Warteschlange (Q) kurzzeitig gespeichert werden.

7. Verfahren nach Anspruch 5,
   **dadurch gekennzeichnet,**
   **daß** für die Umwandlung ein Startwert des Exponenten eines Exponenten/Mantissen Formats gewählt wird, der als Anfangsparameter eines iterativen Umsetzverfahrens anzusehen ist,bei dem für den Startwert größer Null und e = 9 gewählt wird, und ausgehend von diesem Startwert abhängig vom Ergebnis des Steuerungsverfahrens (ER) dieser Wert des Exponenten solange inkrementiert bzw. dekrementiert wird, bis der endgültige zur Darstellung des Ergebnisses in einem Exponenten/ Mantissen Format geeignete Wert gefunden ist.

8. Verfahren nach einem der Ansprüche 5 bis 7,
   **dadurch gekennzeichnet,**
   **daß** die Umwandlung einen Exponenten e und eine Mantisse m liefert, die gemäß der Formel $0 \leq m \leq 512$ und $2^e (1+(\frac{m}{512}))$ dem noch nicht umgewandelten Ergebnis des Steuerungsverfahrens des Feldes (ER) der Explicit Cell Rate entspricht.

9. Verfahren nach einem der Ansprüche 5 bis 8,
   **dadurch gekennzeichnet,**
   **daß** für die Umwandlung des noch nicht umgewandelten Ergebnisses des Steuerungsverfahrens im Feld (ER) der Explicit Cell Rate, das größer als 1023 war, der Exponent e schrittweise um 1 erhöht wird, bis der Wert des Exponenten erreicht wird, mit dem sich das umzuwandelnde Ergebnis des Steuerungsverfahrens korrekt in einem Exponenten/ Mantissen Format darstellen läßt.

10. Verfahren nach einem der Ansprüche 5 bis 8, **dadurch gekennzeichnet,** **daß** für die Umwandlung des noch nicht umgewandelten Ergebnisses des Steuerungsverfahrens im Feld (ER) der Explicit Cell Rate, das kleiner als 512 war, der Exponent e schrittweise um 1 erniedrigt wird, bis der Wert des Exponenten erreicht wird, mit dem sich das umzuwandelnde Ergebnis des Steuerungsverfahrens korrekt in einem Exponenten/ Mantissen Format darstellen läßt.

## Claims

1. Method for optimizing the capacity utilization of link sections in ABR traffic, having ATM cells which are associated with ABR traffic and which are transmitted between at least one transmitter device (S) and at least one receiver device (E) over common link sections, an uplink direction thereby being defined, and there being inserted into the stream of ATM cells control cells (RM) which are removed from the at least one receiver device (E) and transmitted back to the at least one transmitter device (S), an uplink direction thereby being defined, **characterized in that**, during transmission in the uplink direction the frequency of the occurrence of the ATM cells is measured on a link-specific basis, and the result ($ABR\_Rate_i$) thereby determined is fed with further measured parameters to a control method which is started by the measurement of the frequency of the occurrence of the ATM cells ($ABR\_Rate_i$), **in that** the entry of the result of this control method into the control cells (RM) transmitted in the downlink direction is rendered dependent on whether this result is greater or less than a value (ER) also held there, and **in that** the adaptation of the transmission rate in the transmitter device (S) is rendered dependent on this value included in the control cells (RM).

2. Method according to Claim 1, **characterized in that** the further measured parameters are direct link-related parameters which are a measure of the current filling level of the waiting queue ($Q_{fill}$), the current filling level of the scheduler block ($SB_{fill}$), and the current filling level of the parameters ($BU_{fill}$) calculated as the sum of the scheduler blocks.

3. Method according to Claim 1, **characterized in that** the further measured parameters (BW_UTILISED, BW_AVAILABLE) are indirectly link-related parameters which are a measure of the instantaneous rate which the rescheduler block has used (BW_UTILISED) for ABR links of the relevant scheduler block, and/or are a measure of the instantaneous rate which would be free (BW_AVAILABLE) for the sum of all ABR links of the relevant scheduler block).

4. Method according to Claim 1, 2 or 3, **characterized in that** the result of the measurement of the frequency of the occurrence of the ATM cells ($ABR\_Rate_i$) is stored together with the further measured parameters after the measuring operation in at least one input waiting queue before they are fed to the control method as input parameters.

5. Method according to one of the preceding claims, **characterized in that** the result of the control method is stored in a first waiting queue (QU), is subsequently converted into an exponential format and entered into the control cells (RM).

6. Method according to one of the preceding claims, **characterized in that** the ATM cells are stored briefly in a second waiting queue (Q) during the measuring operation.

7. Method according to Claim 5, **characterized in that** selected for the conversion is a starting value of the exponent of an exponent/mantissa format which is to be regarded as an initial parameter of an iterative conversion method in which greater than zero and e=9 are selected for the starting value, and starting from this starting value, this value of the exponent is incremented or decremented as a function of the result of the control method (ER) until the final value suitable for representing the result in an exponent/ mantissa format is found.

8. Method according to one of Claims 5 to 7, **characterized in that** the conversion supplies an exponent e and a mantissa m which corresponds in accordance with the formulae $0 \leq m \leq 512$ and $2^e (1+(\frac{m}{512}))$ to the as yet unconverted result of the control method of the field (ER) of the explicit cell rate.

9. Method according to one of Claims 5 to 8, **characterized in that** in order to convert the as yet unconverted result of the control method in the field (ER) of the explicit cell rate which was greater than 1023, the exponent e is raised in steps by 1 until the value of the exponent is reached with which the result of the control method to be converted can be represented correctly in an exponent/mantissa format.

10. Method according to one of Claims 5 to 8, **characterized in that** in order to convert the as yet unconverted result of the control method in the field (ER) of the explicit cell rate which was less than 512, the exponent e is lowered in steps by 1 until the value of the exponent is reached with which the result of the control method to be converted can be correctly represented in an exponent/mantissa format.

## Revendications

1. Procédé pour l'optimisation de la charge de tronçons de liaison en trafic ABR, comprenant :

   des cellules ATM appartenant au trafic ABR et transmises entre au moins un dispositif émetteur (S) et au moins un dispositif récepteur (E) par des tronçons de liaison communs, ce qui définit une direction aller, des cellules de commande (RM) étant insérées dans le flux de cellules ATM, étant extraites par l'au moins un dispositif de réception (E), et étant renvoyées à l'au moins un dispositif émetteur (S), ce qui définit une direction retour,

   **caractérisé en ce que**

   pendant la transmission dans la direction aller, la fréquence de l'apparition des cellules ATM est mesurée individuellement sur chaque liaison et le résultat ainsi obtenu ($ABR\_Rate_i$) est transféré avec d'autres paramètres mesurés à une opération de commande qui est lancée par la mesure de la fréquence de l'apparition des cellules ATM ($ABR\_Rate_i$),
   **en ce que** l'introduction du résultat de cette opération de commande dans les cellules de commande (RM) transmises dans la direction retour s'effectue suivant que ce résultat est supérieur ou inférieur à une valeur (ER) qui y est introduite conjointement, et
   **en ce que** l'adaptation du débit de transfert s'effectue dans le dispositif émetteur (S) en fonction de cette valeur contenue dans les cellules de commande (RM).

2. Procédé selon la revendication 1, **caractérisé en ce que** les autres paramètres mesurés sont des paramètres qui sont directement associés à la liaison et qui constituent une mesure de l'état effectif de remplissage de la file d'attente ($Q_{fill}$), de l'état de remplissage affectif du bloc de synchronisation et d'ordonnancement ($SB_{fill}$) ainsi que de l'état effectif de remplissage des paramètres ($Bu_{fill}$) calculés comme somme du bloc de synchronisation et d'ordonnancement.

3. Procédé selon la revendication 1, **caractérisé en ce que** les autres paramètres mesurés (BW_UTILISED, BW_AVAILABLE) sont des paramètres qui sont indirectement associés à la liaison et qui constituent une mesure du débit momentané que le bloc de synchronisation et d'ordonnancement a utilisé pour toutes les liaisons ABR du bloc de synchronisation et d'ordonnancement concerné (BW_UTILISED) et/ou une mesure du débit momentané (BW_AVAILABLE) qui serait disponible pour la somme de toutes les liaisons ABR du bloc de synchronisation et d'ordonnancement concerné.

4. Procédé selon les revendications 1, 2 ou 3, **caractérisé en ce qu'**après l'opération de mesure, le résultat de la mesure de la fréquence de l'apparition des cellules ATM ($ABR\_Rate_i$) est mis en mémoire dans au moins une file d'attente d'entrée en même temps que les autres paramètres mesurés avant d'être transféré à l'opération de commande comme paramètre d'entrée.

5. Procédé selon l'une des revendications précédentes, **caractérisé en ce que** le résultat de l'opération de commande est mis en mémoire dans une première file d'attente (QU) est ensuite converti à un format exponentiel pour être introduit dans les cellules de commande (RM).

6. Procédé selon l'une des revendications précédentes, **caractérisé en ce que** pendant l'opération de mesure, les cellules ATM sont mises en mémoire brièvement dans une deuxième file d'attente (Q).

7. Procédé selon la revendication 5, **caractérisé en ce que** pour la conversion, on sélectionne une valeur initiale de l'exposant d'un format exponentiel/ mantisse qui doit être considéré comme paramètre initial d'une opération itérative de conversion pour laquelle on sélectionne comme valeur initiale une valeur supérieure à zéro et e = 9, et partant de cette valeur initiale, en fonction du résultat de l'opération de commande (ER), cette valeur de l'exposant est incrémentée resp. décrémentée jusqu'à ce que la valeur finale appropriée pour représenter le résultat à un format exposant/mantisse ait été découverte.

8. Procédé selon l'une des revendications 5 à 7, **caractérisé en ce que** la conversion fournit un exposant e et une mantisse m qui vérifient les formules $0 \leq m \leq 512$, et $2^e(1+(m/512))$ correspond au résultat non encore convertis de l'opération de commande du champ (ER) du débit explicite de cellules ("Explicit Cell Rate").

9. Procédé selon l'une des revendications 5 à 8, **caractérisé en ce que** pour la conversion du résultat non encore converti de l'opération de commande dans le champ (ER) du débit explicite de cellules qui serait supérieur à 1 023, l'exposant e est augmenté par incréments de 1 jusqu'à ce que l'on atteigne la valeur de l'exposant pour laquelle le résultat à convertir de l'opération de commande puisse être représenté correctement dans un format exposant/mantisse.

**10.** Procédé selon l'une des revendications 5 à 8, **caractérisé en ce que** pour la conversion du résultat non encore converti de l'opération de commande dans le champ (ER) du débit explicite de cellules ("Explicit Cell Rate") qui serait inférieur à 512, l'exposant e est diminué par incréments de 1 jusqu'à ce que l'on obtienne la valeur de l'exposant avec laquelle le résultat à convertir de l'opération de commande puisse être représenté correctement dans un format exposant/mantisse.

FIG 1

# FIG 2

ERST

ERUP

ERCONV

Qu

ERCALC

ABR_rate$_j$
Q$_{fill}$
SB$_{fill}$
Bu$_{fill}$

BW_UTILISED
BW_AVAILABLE

Q

B

# FIG 3

```
e = 9
If ER ≥ 512
        THEN WHILE ER > 1023 DO
                    e = e+1
                    ER = INT (ER/2)
            END (*WHILE*)
            m = ER - 512
ELSE WHILE ER < 512 DO
            e = e-1
            ER = ER*2
        END (*WHILE*)
        m = ER - 512
```